# EUROPEAN PATENT SPECIFICATION

(11) **EP 3 762 662 B1**
(45) Date of publication and mention of the grant of the patent: **13.12.2023**
(21) Application number: 19711428.3
(22) Date of filing: 20.02.2019
(51) Int. Cl.: F24F 13/28, F24F 8/108, F24F 8/183

(54) **VENTILATION ASSEMBLY**
LÜFTUNGSANORDNUNG
ENSEMBLE DE VENTILATION

(30) Priority: 08.03.2018 IT 201800003381
(43) Date of publication of application: 13.01.2021
(73) Proprietor: HSD Holding Smart Device S.r.L., 00195 Roma (IT)
(72) Inventor: Narciso, Paolo, 00195 Roma (IT)
(74) Representative: Trentin, Michele
(86) International application number: PCT/IB2019/051379
(87) International publication number: WO 2019/171195

(56) References cited:
- CN-U- 204 474 342
- JP-A- H10 216 436
- JP-A- 2003 170 015
- JP-U- S51 146 481
- KR-A- 20170 112 172
- US-A- 5 015 381
- US-A- 5 205 849
- US-A1- 2014 224 658

## Description

### Field of application

The present invention is generally applicable to the ventilation sector and refers to the assisted ventilation of people.

More in detail, the present invention relates to the air treatment of air used for the assisted breathing of people.

### Background Art

As known, there is often the need to create an air stream between one point and another. Typically, this is achieved by means of ventilation assemblies which create such air stream between an intake channel, whose inlet draws the air from the area in which it is placed, and a delivery channel whose outlet supplies the air to the area of interest.

Some examples are the forced ventilation and/or room conditioning assemblies that create an air stream between the outside and a closed room. Other examples, however, refer to air purifying devices that draw air from the room in which they are and re-inject it into the same room after having purified it. Further simpler examples are the assisted breathing assemblies typically used in the medical field.

In all the aforementioned examples, in addition to the intake channel and the delivery channel, a device designed for generating the air stream between the two is present. Generally, this device is an electric powered mechanical fan, but it can be of different origin, such as for example the Ambu bags which are manually operated.

It is also known that air contains elements such as particles and microorganisms that compromise its purity. These elements are normally breathed by people, however they represent a health hazard. In this sense, therefore, the ventilation assemblies typically comprise a filtering section of the air stream designed to retain as much as possible the particulate and, in some cases, to sanitize the flow itself by eliminating or reducing its bacterial load.

The known filtering sections are constituted by filtering barriers suitable for being traversed by the air stream and having a lattice sufficiently thin to retain the particulate even of small dimensions. In other cases, such as in the case of vacuum cleaners, a cyclonic filter is often used. The latter is based on the generation of a cyclonic air stream so that the particulate slams against the filter walls and is collected by falling.

In all such cases what is observed is that the filtering section constitutes a considerable obstacle to the air stream. For example, in the case of filtering barriers, the need to filter small particles requires the use of a material with very narrow and thick lattice. Therefore, the pressure drop of the air stream is evident. This aspect is of considerable importance since the air stream pressure is typically vital for the good operation of the assembly and this forces to adopt air stream generation devices which are more powerful than what would be necessary. This is not only expensive in terms of production costs of the ventilation assembly, but also in terms of energy consumption during use. It is therefore typically necessary to reach a compromise by sacrificing the quality of filtering. Alternatively, larger filters must be provided, which however are very cumbersome and expensive. In this latter case, however, it influences its use in the biomedical sector since their placement with respect to the patient and the machinery is problematic.

In the case of cyclonic filters, however, collection by falling is not always effective, so that often they have in any case an additional filtering barrier.

Korean patent document KR20170112172A discloses a combined dust collecting apparatus attached to a vehicle, including a hollow body having an air inlet and an air outlet; an inertial dust collecting unit for disturbing a flow direction of air introduced into the body and collecting dust that can not follow the flow of air; and an electric dust collection unit disposed in series with the inertial dust collection unit with respect to the air introduction direction for collecting dust in the air introduced into the body.

Japanese utility model JP S51 146481 U discloses a filtering device for a gas burner, wherein a spirally shaped guide vane is disposed inside a cylindrical body, and wherein the entire surface of the cylindrical body and the entire surface of the guide vane is coated with a non-drying adhesive, adapted to capture dust entrained in the gas stream flowing through the filtering device.

### Presentation of the invention

The object of the present invention is to overcome at least partially the drawbacks pointed out above by providing a ventilation assembly which allows to obtain an outlet air stream in which the presence of particulate and bacterial load is at most equal to the equivalent assemblies of the known art.

Another object of the present invention is to provide a ventilation assembly whose filtering section has an inferior obstacle to the air stream with respect to the equivalent assemblies of the prior art.

A further object is that the assembly of the invention presents a filtering section which is not cumbersome or which, having the same overall dimensions, has a filtering efficiency higher than the equivalent assemblies of the prior art.

Another object is that the assembly of the invention is less expensive than the known equivalent assemblies both in terms of production costs and in terms of operating costs.

Said objects, as well as others which will become more apparent below, are achieved by a ventilation assembly according to the following claims, wherein claim 1 defines the invention, and the dependent claims define preferred embodiments of the present invention.

In particular, the ventilation assembly comprises at least one air intake channel from the surrounding room and at least one delivery channel. At least one air stream generating device is operatively connected thereto, which starts from the inlet of the intake channel (drawing air from the surrounding area) and is blown through the outlet of the delivery channel.

The assembly further includes a filtering section of the air stream to decrease, if not eliminate, the presence of particulate in the air stream itself. In this sense, the filtering section can be arranged at any point between the intake channel inlet and the delivery channel outlet.

According to the invention, the filtering section comprises more than one filter having a containment body provided with an intake opening and a delivery opening for the air stream which must pass through it. The same filter comprises, inside the containment body, one or more air-tight air bulkheads shaped to force the air stream to collide with the bulkheads themselves. The latter, however, have at least a section portion suitable for being penetrated by the particulate in the air stream.

Advantageously, therefore, the collision of air against the walls causes the collision of the particulate with the same and, consequently, penetrates and remains trapped there. Still advantageously, there is no danger, as happens in the cyclonic ventilation assemblies, that the air stream takes back in a part of such particulate.

Since the air stream cannot traverse the bulkheads, they typically accompany it from the intake conduit to the delivery conduit. Advantageously, therefore, they do not constitute a serious obstacle to the passage of air thereby ensuring a lower load than in the prior art.

Still advantageously, the filtering section of the assembly of the invention is smaller than in the prior art with the same filtering efficiency.

Moreover, since the filters of the assembly of the invention offer a reduced obstacle with respect to the filters of the known equivalent ventilation assemblies, the assembly of the invention is less expensive both in terms of execution costs and in terms of energy consumption during the operation step.

According to another aspect of the invention, since it has been said that the filters which constitute the filtering section of the invention are small with respect to the known equivalent filters, in the assembly of the invention the filtering section comprises two or more filters arranged operatively in parallel with each other and/or two or more filters arranged operatively in series with each other. Advantageously, therefore, with the same overall dimensions, the air filtering efficiency of the assembly of the invention is strongly increased with respect to the equivalent assemblies of the prior art since it derives from the collaboration of multiple filters.

Moreover, in the case of known filters, the filtering efficiency, depending on the size of the lattice, does not benefit greatly by arranging the filters in series. On the contrary, with such configuration the obstacle to the air stream is often increased in an unacceptable manner. In the case of the invention, on the other hand, since the filtering takes place in a different manner, the overall efficiency increases by adding filters in series.

### Brief description of the drawings

Further features and advantages of the invention will become more apparent in light of the detailed description of a preferred but not exclusive embodiment of a ventilation assembly according to the invention, illustrated by way of non-limiting example with the aid of the accompanying drawings, wherein:
- FIG. 1 represents a ventilation assembly according to the invention in a schematic view;
- FIGS. 2 and 3 represent some details of the ventilation assembly of FIG. 1;
- FIGS. 4 and 5 show some details of a variant embodiment of the ventilation assembly of the invention in a schematic view.

### Detailed description of some preferred exemplary embodiments

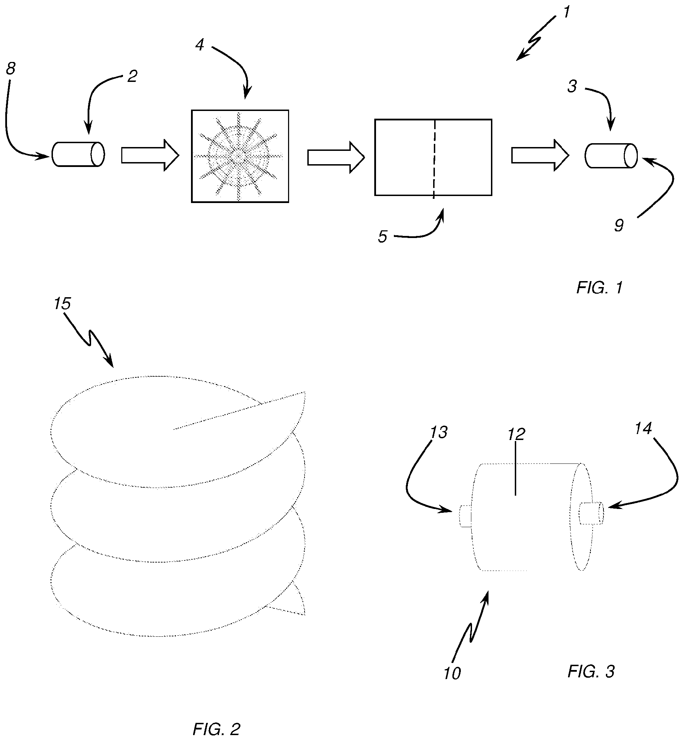

With reference to the above-mentioned figures, and in particular to fig. 1, described herein is a ventilation assembly **1** according to the invention.

The ventilation assembly **1** can be used for various purposes. As said, the present invention is not limited to assemblies with forced ventilation of mechanical or electromechanical origin, but also to differently operated assemblies such as those operated manually.

In any case, like all such assemblies, even that of the invention comprises at least an air intake channel **2** from the room surrounding the opening of the intake channel **2** itself. There is also a delivery channel **3** for blowing the air at the destination, where the destination is the oral cavity of a person.

The assembly **1** of the invention further comprises an air stream generating device **4** between the intake channel **2** and the delivery channel **3.**

As mentioned above, the generating device **4** can be constructed in different ways. For example, it can consist of a fan or a vacuum pump or a manually operated Ambu bag. In other words, the embodiment of such a component can be of any type and should not be considered as limiting for the invention since what matters is that the generating device **4** generates the air stream between the intake channel **2** and the delivery channel **3.** It follows that the ventilation assembly **1** of the invention is typically of the type for forced ventilation.

It is also apparent that the number of intake and delivery channels as well as the number of air stream generating devices are not limiting features of the present invention since in the described ventilation assembly, they may be in any quantity whatsoever according to the requirements of use.

According to an aspect of the invention, the assembly **1** also comprises a filtering section **5** of the air stream to decrease, if not cancel, the presence of particulate in the air coming out from the delivery channel **3.**

For this purpose, it is apparent that the positioning of such filtering section **5** is irrelevant for the purposes of the invention. In other words, it can be arranged at any point between the inlet end **8** of the intake channel **2** and the outlet end **9** of the delivery channel **3.**

Also, the number of filtering sections is not to be intended as a limiting characteristic for the invention since in the ventilation assembly that is described they can also be in any quantity whatsoever according to the requirements of use.

According to the invention, the filtering section 105 comprises two or more filters 110 operatively arranged in parallel with each other and two or more filters 110 operatively arranged in series with each other, wherein each filter **10,** visible in fig. 2, has a containment body **12** provided with an intake opening **13** and a delivery opening **14** for the air stream passing through it. Preferably, the containing body 12 has a cylindrical shape, but even this aspect must not be considered as limiting for the invention, the shaping of the containment body being of any type. Also, the number of intake and delivery openings are non-limiting characteristics of the invention, such openings being able to be in any number whatsoever.

According to the invention, the filter **10** comprises, inside it, a bulkhead **15** visible in fig. 3. It is air-tight and shaped to force the air stream to collide with it and with the inner walls of the containment body **12** in transit between the intake opening **13** and the delivery opening **14.** Furthermore, the bulkhead **15** and the inner walls of the containment body **12** have a section portion, starting from the surface of the bulkhead **15,** suitable to be penetrated by the particulate present in the air stream.

Advantageously, therefore, the bulkheads **15** are arranged in such a way that the air stream follows a path which causes it to have one or more collisions with them and with the aforementioned inner walls. However, since both the bulkhead **15** and the containment body **12** are air-tight, the bulkhead **15** typically accompanies the air stream between the intake opening **13** and the delivery opening **14** thus constituting a minimum obstacle to such flow with respect to known filters where the air stream must pass through the air guiding foil.

Still advantageously, the collisions of the air stream with the bulkhead **15** and the walls of the containment body 12 also lead also the particulate and the bacteria that the stream itself carries to collide with them. Due to the section portion, they penetrate into the bulkhead **15** and into the containment body **12** and are retained there. Therefore, the risk, as in the cyclonic filters, that a part of the particulate is collected again by the air stream and brought to the delivery opening **14** is avoided.

As a consequence, not only does the filter **10** constitute a lower load compared to the known technique for the air stream, softly affecting the pressure of the same, but also allows to obtain an excellent filtering efficiency obtaining at least equal results, if not generally higher, to known equivalent filters.

Preferably, the section portion suitable for retaining the particulate in the air stream consists of a layer of material with viscoelastic features arranged to cover the surface of the bulkhead **15** and the inner walls of the containment body **12.** An example, in this sense, is the use of water-based or fat-based gel. However, this feature should not be considered as a limiting feature for the invention. The section portion subjected to collisions, in fact, can be made differently. According to another embodiment, in fact, the bulkhead and containment body are made of a single material and the section portion consists of a superficial softening of the material itself. According to another embodiment of the invention, the whole bulkhead can be penetrated by the particulate.

According to another aspect of the invention, however, a portion of the bulkhead **15** is ionized to attract and retain ionized particulates, but also this feature of the invention should not be considered as limiting.

It is apparent that also the number of bulkheads in the filter **10** is not a limiting feature for the invention since they can be in any quantity whatsoever according to the purposes of use of the ventilation assembly **1.**

However, according to a further aspect of the invention, the shaping of the bulkhead **15** is made in such a way as to promote not only collisions of the air stream with itself, but also the passage of such stream from the intake opening **13** to the delivery opening **14.** In this sense, according the invention, the bulkhead **15** has a helical shape. This allows, advantageously, to reduce the obstacle opposite to the air stream in transit and at the same time, generating turbulence, to promote the greatest number of collisions between the particulate contained therein and the bulkhead **15.**

Moreover, according to a further exemplary embodiment of the invention, also not shown in the figures, the helical bulkhead has a variable and decreasing pitch between the intake opening and the delivery opening. In this case, advantageously, there is a progressive reduction of the passage section and a further increase in turbulence effect.

According to a further aspect of the invention, however, a turbulence generator is present close to the intake opening **13** of the filter **10,** although not shown in the figures. According to some exemplary embodiments, the latter consists of aerodynamic profiles having the function of generating controlled turbulence. This allows, advantageously, to be able to shape the bulkheads **15** so as to reduce the head losses while maintaining an excellent turbulence value inside the filter **10.** Said profiles can be, according to different embodiments of the invention, multiples and with a differentiated passage section (also decreasing to obtain a blowing effect).

As it has been seen, the filter **10** of the filtering section **5** has with the same operation effectiveness on the air stream, smaller dimensions than in the prior art. This allows, using the same overall dimensions, to use several filters **10** in combination.

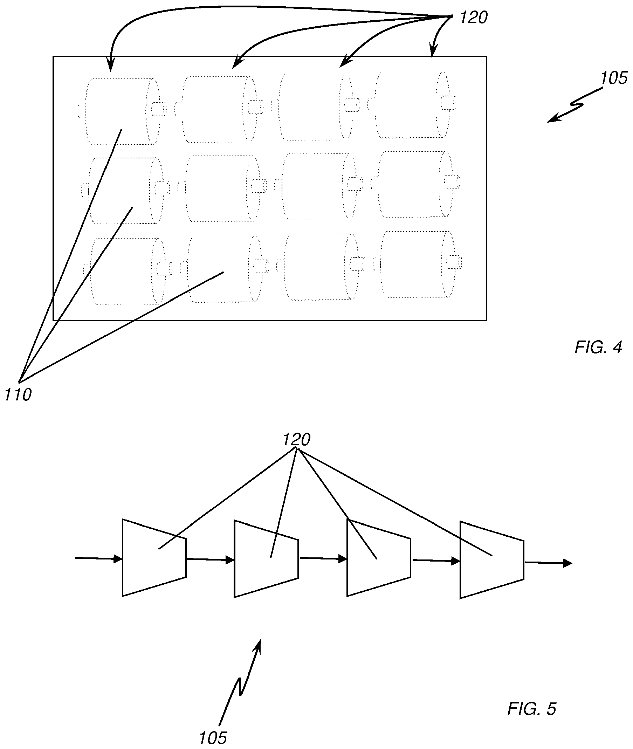

In this sense, according to the invention, represented in fig. 4, the filtering section **105** comprises two or more filters **110** operatively arranged in parallel with each other, and two or more filters 110 operatively arranged in series with each other. In this way advantageously, the operation of the filters **110** on the air stream is partitioned by reducing the obstacle offered to the stream itself (and thus decreasing the negative effect on the stream pressure).

The arrangement, as can also be inferred from fig. 5, allows to increase the filtering efficiency of the air stream.

Advantageously, therefore, it is possible to choose to arrange multiple filters **110** operatively in series and in parallel to keep the impact on the air stream pressure low while increasing the filtering efficiency.

It is evident that the combination in series and parallel between filters and filter groups may be of any type as long as within the scope of protection defined in the claims.

To point out these aspects, it should be noted that some examples of filters of the known art have diameters having sections with a diameter in the order of 10 cm and lengths also in the order of 10 cm. In the case of the invention, an equivalent filter **10** has a section with a diameter of 1 cm and a length even less than a centimetre. It is evident, therefore, that in the same volume numerous filters **10** according to the invention can be arranged in parallel and in series. In particular, ten filters **10** can be arranged in series on a single line, substantially increasing the filtering efficiency tenfold.

Operatively, therefore, the generating device **4** induces an air stream between the intake channel **2** and the delivery channel **3** by drawing air from the outside. When the air stream passes through the filtering section **5,** it passes through the filter **10.** The helical conformation of the bulkhead **15** accompanies the air stream towards the outlet of the filter **10** with a minimum obstacle. However, the turbulence that is created causes collisions between the suspended particulate in the air stream and the bulkhead **15.** The particulate then penetrates the bulkhead **15** and remains trapped there.

In light of the foregoing, it is understood that the ventilation assemblies of the invention reach all the intended purposes.

In particular, it allows to obtain an outlet air stream in which the presence of particulate and bacterial load is at most equal to the equivalent assemblies of the prior art while presenting a reduced obstacle to the air stream with respect to the equivalent assemblies of the known art.

Ultimately the assembly of the invention presents a filtering section which is not cumbersome or which, having the same overall dimensions, has a filtering efficiency higher than the equivalent assemblies of the prior art. It is also less expensive both in terms of production costs and in terms of operating costs.

The invention might be subject to many changes and variants, as long as within the scope of the appended claims. Moreover, all the details may furthermore be replaced by other technically equivalent elements, and the materials may be different depending on the needs, without departing from the protection scope of the invention defined by the appended claims.

## Claims

1. A ventilation assembly for the assisted breathing of people comprising:
- at least one intake channel **(2)** of the air from the surrounding room;
- at least one delivery channel **(3)** configured for blowing the air to the oral cavity of a person;
- at least one generating device **(4)** of an air stream between said intake channel (2) and delivery channel **(3);**
- at least one filtering section (**5; 105**) of the air stream configured for decreasing, if not eliminate, the presence of particulate in the air stream, said filtering section (**5; 105**) being operatively positioned at any point whatsoever of the ventilation assembly (**1**) between the inlet end (**8**) of said intake channel (**2**) and the outlet end (**9**) of said delivery channel (**3**)**,**
wherein said filtering section (105) comprises two or more filters (110) operatively arranged in parallel with each other and two or more of filters (110) operatively arranged in series with each other each filter (110) having:
- a containment body **(12)** provided with an intake opening **(13)** and a delivery opening **(14)** for the air stream passing through it;
- one or more air-tight bulkheads **(15),** arranged within said containment body **(12)** and shaped to force the air stream to collide with said bulkheads **(15)** and with the inner walls of said containment body **(12),** said bulkheads **(15)** and said containment body **(12)** having at least a section portion configured to be penetrated by the particulate in the air stream so as to retain it therein, said bulkheads **(15)** identifying a path free of obstacles for the air stream between said intake opening **(13)** and said delivery opening **(14),** said one or more bulkheads **(15)** having a helical development.

2. Ventilation assembly according to claim 1, wherein said section portion of said bulkheads (**15**) and said containment body (12) consists of a material with viscoelastic features arranged to cover said bulkheads (15) and said containment body (12).

3. Ventilation assembly according to claim 1, wherein said section portion of said bulkheads (15) and containment body (12) is constituted by a softened portion of the bulkheads and containment body material.

4. Ventilation assembly according to any one of the preceding claims, wherein at least a portion of said bulkheads **(15)** is ionised to attract and retain ionized particles.

5. Ventilation assembly according to any one of the preceding claims, comprising at least one turbulence generator arranged at least close to said intake opening of said filter.

6. Ventilation assembly according to any one of the preceding claims, wherein said containment body **(12)** is shaped as a cylinder.

7. 9. Ventilation assembly according to any one of the preceding claims, wherein said generating device **(4)** of an air stream comprises a mechanical fan.

## Patentansprüche

1. Beatmungsanordnung zur Atmungsunterstützung von Menschen, umfassend:
- mindestens einen Einlasskanal (2) der Luft aus dem umgebenden Raum;
- mindestens einen Abgabekanal (3), der dafür eingerichtet ist, um Luft in die Mundhöhle eines Menschen zu blasen;
- mindestens eine Generierungsvorrichtung (4) eines Luftstroms zwischen dem genannten Einlasskanal (2) und Abgabekanal (3);
- mindestens eine Filtersektion (5; 105) des Luftstroms, die dafür eingerichtet ist, um das Vorliegen von Teilchenmaterial in dem Luftstrom zu verringern, wenn nicht zu eliminieren, wobei die genannte Filtersektion (5; 105) operativ an irgendeinem Punkt der Beatmungsanordnung (1) zwischen dem Einlassende (8) des genannten Einlasskanals (2) und dem Auslassende (9) des genannten Abgabekanals (3) positioniert ist,
wobei die genannte Filtersektion (105) zwei oder mehr Filter (110), die operativ parallel zueinander angeordnet sind, und zwei oder mehr Filter (110), die operativ in Serie miteinander angeordnet sind, umfasst,
wobei jeder Filter (110) aufweist:
- einen Aufnahmekörper (12), der mit einer Einlassöffnung (13) und einer Abgabeöffnung (14) für den hindurchgehenden Luftstrom versehen ist;
- einen oder mehrere luftdichte Trennwände (15), die innerhalb des genannten Aufnahmekörpers (12) angeordnet und geformt sind, um den Luftstrom dazu zu bringen, mit den genannten Trennwänden (15) und mit den Innenwänden des genannten Aufnahmekörpers (12) zu kollidieren, wobei die genannten Trennwände (15) und der genannte Aufnahmekörper (12) mindestens einen Sektionsabschnitt aufweisen, der dafür eingerichtet ist, um von dem Teilchenmaterial in dem Luftstrom penetriert zu werden, um es so darin zu halten, wobei die genannten Trennwände (15) einen Weg frei von Hindernissen für den Luftstrom zwischen der genannten Einlassöffnung (13) und der genannten Abgabeöffnung (14) identifizieren, wobei die genannte eine oder die mehreren Trennwände (15) eine helixförmige Entwicklung aufweisen.

2. Beatmungsanordnung nach Anspruch 1, wobei der genannte Sektionsabschnitt der genannten Trennwände (15) und der genannte Aufnahmekörper (12) aus einem Material mit viskoelastischen Merkmalen bestehen, das angeordnet ist, um die genannten Trennwände (15) und den genannten Aufnahmekörper (12) zu bedecken.

3. Beatmungsanordnung nach Anspruch 1, wobei der genannte Sektionsabschnitt der genannten Trennwände (15) und der genannte Aufnahmekörper (12) aus einem erweichten Abschnitt der Trennwände und des Aufnahmekörpermaterials bestehen.

4. Beatmungsanordnung nach einem der vorhergehenden Ansprüche, wobei mindestens ein Abschnitt der genannten Trennwände (15) ionisiert ist, um ionisierte Teilchen anzuziehen und zu halten.

5. Beatmungsanordnung nach einem der vorhergehenden Ansprüche, umfassend mindestens einen Turbulenzgenerator, der mindestens nahe bei der genannten Einlassöffnung des genannten Filters angeordnet ist.

6. Beatmungsanordnung nach einem der vorhergehenden Ansprüche, wobei der genannte Aufnahmekörper (12) als Zylinder geformt ist.

7. Beatmungsanordnung nach einem der vorhergehenden Ansprüche, wobei die genannte Generierungsvorrichtung (4) eines Luftstroms ein mechanisches Gebläse umfasst.

## Revendications

1. Ensemble de ventilation pour la ventilation assistée de personnes comprenant :
- au moins un canal d'admission (2) de l'air provenant de la pièce environnante ;
- au moins un canal de distribution (3) configuré pour souffler l'air vers la cavité orale d'une personne ;
au moins un dispositif de génération (4) d'un flux d'air entre ledit canal d'admission (2) et ledit canal de distribution (3) ;
- au moins une section de filtrage (5 ; 105) du flux d'air configurée pour réduire, sinon éliminer, la présence de particules dans le flux d'air, ladite section de filtrage (5 ; 105) étant positionnée fonctionnellement à n'importe quel point de l'ensemble de ventilation (1) entre l'extrémité d'entrée (8) dudit canal d'admission (2) et l'extrémité de sortie (9) dudit canal de distribution (3),
dans lequel ladite section de filtrage (105) comprend deux filtres (110) ou plus agencés fonctionnellement en parallèle les uns avec les autres et deux filtres (110) ou plus agencés fonctionnellement en série les uns avec les autres, chaque filtre (110) présentant :
- un corps de confinement (12) doté d'une ouverture d'admission (13) et d'une ouverture de distribution (14) pour que le flux d'air passe à travers lui ;
- une ou plusieurs cloisons étanches à l'air (15), agencées dans ledit corps de confinement (12) et formées pour forcer le flux d'air à heurter lesdites cloisons (15) et les parois intérieures dudit corps de confinement (12), lesdites cloisons (15) et ledit corps de confinement (12) présentant au moins une partie de section configurée pour que les particules dans le flux d'air y pénètrent de manière à les retenir dans celle-ci, lesdites cloisons (15) identifiant un chemin exempt d'obstacles pour le flux d'air entre ladite ouverture d'admission (13) et ladite ouverture de distribution (14), lesdites une ou plusieurs cloisons (15) présentant un développement hélicoïdal.

2. Ensemble de ventilation selon la revendication 1, dans lequel ladite partie de section desdites cloisons (15) et dudit corps de confinement (12) consiste en un matériau avec des propriétés viscoélastiques agencé pour couvrir lesdites cloisons (15) et ledit corps de confinement (12).

3. Ensemble de ventilation selon la revendication1, dans lequel ladite partie de section desdites cloisons (15) et dudit corps de confinement (12) est constituée d'une partie assouplie des cloisons et d'un matériau de corps de confinement.

4. Ensemble de ventilation selon l'une quelconque des revendications précédentes, dans lequel au moins une partie desdites cloisons (15) est ionisée pour attirer et retenir des particules ionisées.

5. Ensemble de ventilation selon l'une quelconque des revendications précédentes, comprenant au moins un générateur de turbulences agencé au moins près de ladite ouverture d'admission dudit filtre.

6. Ensemble de ventilation selon l'une quelconque des revendications précédentes, dans lequel ledit corps de confinement (12) est formé comme un cylindre.

7. Ensemble de ventilation selon l'une quelconque des revendications précédentes, dans lequel ledit dispositif de génération (4) d'un flux d'air comprend un ventilateur mécanique.
